Europäisches Patentamt

European Patent Office

Office européen des brevets

(19)

(11) Veröffentlichungsnummer: **0 123 004**
**B1**

(12) **EUROPÄISCHE PATENTSCHRIFT**

(45) Veröffentlichungstag der Patentschrift:
24.06.87

(21) Anmeldenummer: 83730042.5

(22) Anmeldetag: 26.04.83

(51) Int. Cl.⁴: **B 60 R 13/02, H 04 R 5/02**

(54) Mehrzweckformteil als freitragende Himmelschale für die Innenverkleidung eines Personenkraftwagens.

(43) Veröffentlichungstag der Anmeldung:
31.10.84 Patentblatt 84/44

(45) Bekanntmachung des Hinweises auf die Patenterteilung:
24.06.87 Patentblatt 87/26

(84) Benannte Vertragsstaaten:
BE DE FR GB IT SE

(56) Entgegenhaltungen:
DE - A - 1 487 351
DE - A - 2 629 474
DE - A - 2 711 376
DE - A - 2 952 510
DE - U - 7 114 684
DE - U - 8 023 226
DE - U - 8 120 075

(73) Patentinhaber: Kiss, Günter H.,
Gustav-Freytag-Strasse 7, D-1000 Berlin 33 (DE)

(72) Erfinder: Kiss, Günter H., Gustav-Freytag-Strasse 7,
D-1000 Berlin 33 (DE)

(74) Vertreter: Meinig, Karl-Heinz, Dipl.-Phys.,
PATENTANWÄLTE PFENNING MEINIG & PARTNER
Kurfürstendamm 170, D-1000 Berlin 15 (DE)

ACTORUM AG

## Beschreibung

Die Erfindung betrifft ein Mehrzweckformteil als freitragende Himmelschale für die Innenverkleidung des Dachbereiches eines Personenkraftwagens (PKW), bestehend aus einem vorzugsweise oberflächenkaschierten dämpfenden Material, wie einem verpressten Faservlies oder dergleichen, und an der Deckenkonstruktion arretierbaren Befestigungsmitteln.

Die Dachkonstruktion eines PKW's ist wegen der hierfür erforderlichen Verstrebungen, Überrollbügel und dergleichen von der Innenseite des Fonds des Wagens her gesehen verkleidet, wobei diese Verkleidung bisher ausschliesslich die Funktion hat, den Kopf der Insassen des Personenkraftwagens gegenüber den genannten Vorrichtungen stosszusichern, wobei die sichtbare Oberfläche des Fahrzeughimmels vorteilhaft neben den genannten mechanischen Dämpfungseigenschaften auch noch solche akustischer Natur besitzt und darüber hinaus optisch einen möglichst gefälligen Eindruck vermitteln soll. Fahrzeughimmel für Personenkraftwagen bestehen daher bekanntlich aus wenigstens teilweise polsternd wirkenden und mechanisch ausreichend beanspruchbaren Bespannungen des Deckenbereiches oder aus freitragenden elastisch nachgiebigen Formteilen mit einer geeigneten Oberflächenkaschierung. Die freitragenden Himmelschalen werden an der Dachkonstruktion mit geeigneten Befestigungsmitteln, wie beispielsweise Schrauben, gehalten.

Die genannten akustischen Eigenschaften des verkleideten Dachbereichs bei Personenkraftwagen sind vorteilhaft im Hinblick auf die Dämpfung der Eigengeräusche des Fahrzeuges und der von aussen in das Fahrzeug eindringenden oft störenden Umweltgeräusche. Sie dienen darüber hinaus der Verbesserung der Verständigungsmöglichkeit bei Gesprächen zwischen den Fahrzeuginsassen während der Fahrt, wie Beschallung von im Fahrzeug angebrachten Lautsprechern für die Rundfunkübertragung oder die Wiedergabe von auf Klangkörpern, wie Tonbandkassetten gespeicherten Tonaufzeichnungen. Die Lautsprecher hierfür sind bisher etwa bei einkanaliger Tonwiedergabe im Armaturenbrett vorzugsweise und insbesondere bei stereophoner Klangwiedergabe in Fussknöchel- bzw. Kniehöhe in den vorderen Türen eingebaut oder im hinteren Bereich des Wagens zu beiden Seiten in die Hutablage ein- oder auf diese aufgesetzt. Für eine Vierkanalwiedergabe (Quadrophonie) aber auch für eine verbesserte Beschallung stereophoner Tonwiedergaben ist es auch bekannt, insgesamt vier Lautsprecher vorzusehen, wovon zwei in den Vordertüren und zwei im Bereich der Hutablage untergebracht sind. In jedem der genannten Fälle ist für eine hinlängliche Beschallung der Insassen mit Sprache oder Musik der Nutzpegel der aufzuwendenden Schallenergie im Fahrzeuginneren gemessen am zu erbringenden Aufwand an Schallenergie verhältnismässig gering, weil der Hauptteil derselben durch die vorhandenen schalldämpfenden Oberflächen verloren geht. So arbeiten beispielsweise die zwischen Knie- und Knöchelhöhe in den Vordertüren des PKW's eingebrachten Lautsprecher weitgehend gegen die Polster der Sitze und die betreffenden Beinbereiche der Fahrzeuginsassen, und sie haben darüber hinaus die aus dem Fussbereich des vorderen Innenraums in das Fahrzeug eindringenden Fahrgeräusche zu übertönen. Ähnlich nachteilig gestalten sich die akustischen Verhältnisse bei der Unterbringung der Lautsprecher im Bereich der Hutablage zumindest für die vorderen Fahrzeuginsassen. In bezug auf ihre Leistungsabgabe und Schallqualität müssen daher im Personenkraftwagen Lautsprecher gemessen an der geringen Raumgrösse des Wageninnenraums erheblich überdimensioniert sein, was entsprechend auch für den Tonerzeuger gilt, wodurch nicht nur die Kosten für eine Tonwiedergabeanlage auch bei nur mittlerer Qualität bereits erheblich sind, sondern darüber hinaus auch noch das Volumen der zu verwendenden Lautsprecher die bekannten und ohnehin vorhandenen Einbauschwierigkeiten zusätzlich negativ beeinflusst.

Bei stereophoner Schallabstrahlung ist es weiterhin nachteilig, dass durch die unterschiedlichen Sitzpositionen der Insassen des Fahrzeuges die Abstände zu den einzelnen Schallquellen bzw. Lautsprechern so stark differieren, dass sich letztlich eine gehörgerechte stereophone Klangwiedergabe nur jeweils für eine Person einstellen lässt.

Aus der DE-U 7 114 684 ist gemäss dem Oberbegriff des Anspruchs 1 eine Deckenauskleidung für Kraftwagen bekannt, die aus einer kaschierten Formschale aus Hartschaum besteht. Durch die Formschale können Kanäle für Be- und Entlüftung oder elektrische Leitungen geführt werden, wobei die Leitungen auch direkt in die Schale eingegossen werden können. Die Formschale kann als Ganzes oder auch in mehreren Teilen gefertigt werden und ihre Befestigung am Fahrzeugdach erfolgt durch Klemmwirkung oder mittels eines Klebers oder Kittes. Das genannte Dokument enthält jedoch keine Ausführungen über die Verwendung der Formschale zu Zwecken der Beeinflussung der Schallabstrahlung von Lautsprechern innerhalb des Kraftwagens.

Der vorliegenden Erfindung liegt die Aufgabe zugrunde, das anfangs genannte Mehrzweckformteil so auszubilden, dass die akustische Schallabstrahlung von Lautsprechern eines Tonwiedergabegerätes im Wageninneren erheblich verbessert wird.

Die Lösung dieser Aufgabe wird erfindungsgemäss durch die im Kennzeichen des Anspruchs 1 angegebenen Merkmale erreicht.

Vorteilhafte Weiterbildungen und Ausgestaltungen dieser Aufgabenlösung ergeben sich aus den Unteransprüchen.

Die Erfindung zeichnet sich dadurch aus, dass mindestens ein schallabstrahlender elektrodynamischer Wandler das Formteil wenigstens teilweise durchgreifend in dieses eingefügt ist, wobei der Aufbau derart vorgenommen und die Formgebung des Formteils so vorgewählt sind, dass im Einbauzustand der bzw. die Wandler mit zugehörigen elektrischen und/oder akustischen Leitungsführungen eine bausatzartige integrale Einheit bilden. Die dem Formteil eigenen Schallführungskanäle machen insbesondere für die Wiedergabe stereophoner Schallquellen eine ausgewogene zweidimensionale Beschallung jedes Fahrzeuginsassen möglich, unabhängig davon, auf welchem Platz dieser sitzt, und sie versteifen den mechanischen Halt des Formteils gleichzeitig und zusätzlich in vorteilhafter Weise. Auch ergibt sich darüber hinaus eine erhebliche Verringerung der durch die vorliegende Anordnung der elektrodynamischen Wandler benötigten Schallenergie, um die gewünschte Energiedichte im Hörbereich des jeweiligen Fahrzeuginsassen bei gleichzeitig hoher Wiedergabequalität zu erreichen. Weiterhin hat die Anbringung der Schallquellen im Dachbereich des PKW's den Vorteil, dass die im Fahrzeuginnenraum vorhandenen reflexionsfähigen Oberflächen, die sich vornehmlich auf die Fensterflächen beschränken, direkt beschallt werden können und somit zur Raumklangverbesserung im erhöhten Masse beitragen.

Anhand der beiliegenden Zeichnungen soll die vorliegende Erfindung näher erläutert werden, wobei sich die Darstellungen auf beispielsweise vorteilhafte Ausführungsformen des Erfindungsgedankens beziehen. Es bedeutet:

Fig. 1 eine Draufsicht auf einen mit dem Erfindungsgegenstand ausgestatteten Personenkraftwagen schematisiert;

Fig. 2 einen Schnitt entlang der Linie A–B von Fig. 1;

Fig. 3 eine schematisierte Schnittdarstellung zur Wiedergabe der Schallaufteilung in bzw. entlang eines Formteils nach der Erfindung;

Fig. 4 eine Draufsicht auf ein Ausführungsbeispiel eines erfindungsgemäss gestalteten Formteils;

Fig. 5 einen Schnitt entlang der Mittellinie durch die Darstellung von Fig. 4 in Pfeilrichtung gesehen; und

Fig. 6 eine Seitenansicht eines mit dem Erfindungsgegenstand ausgestatteten PKW's.

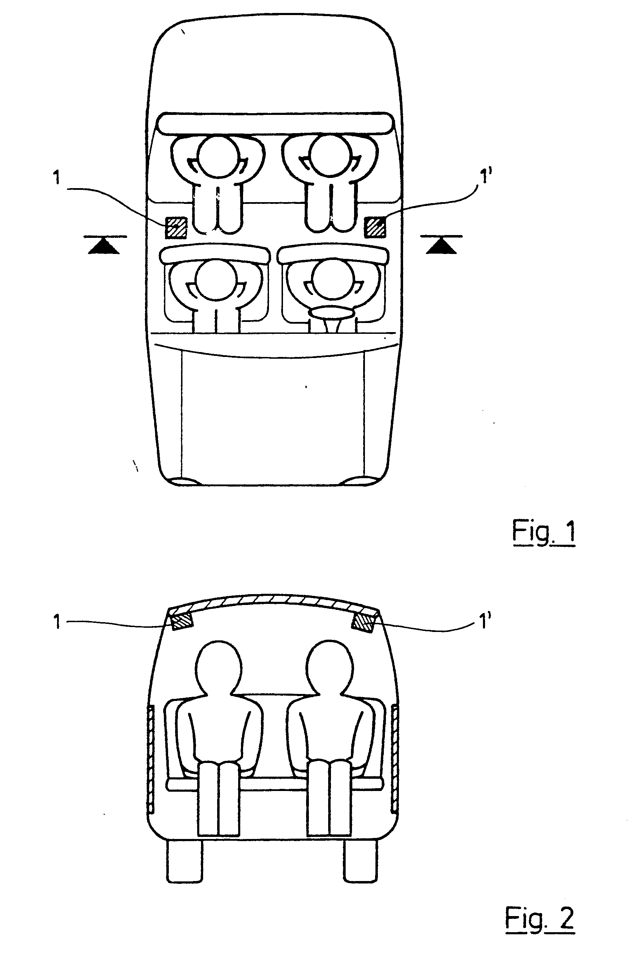

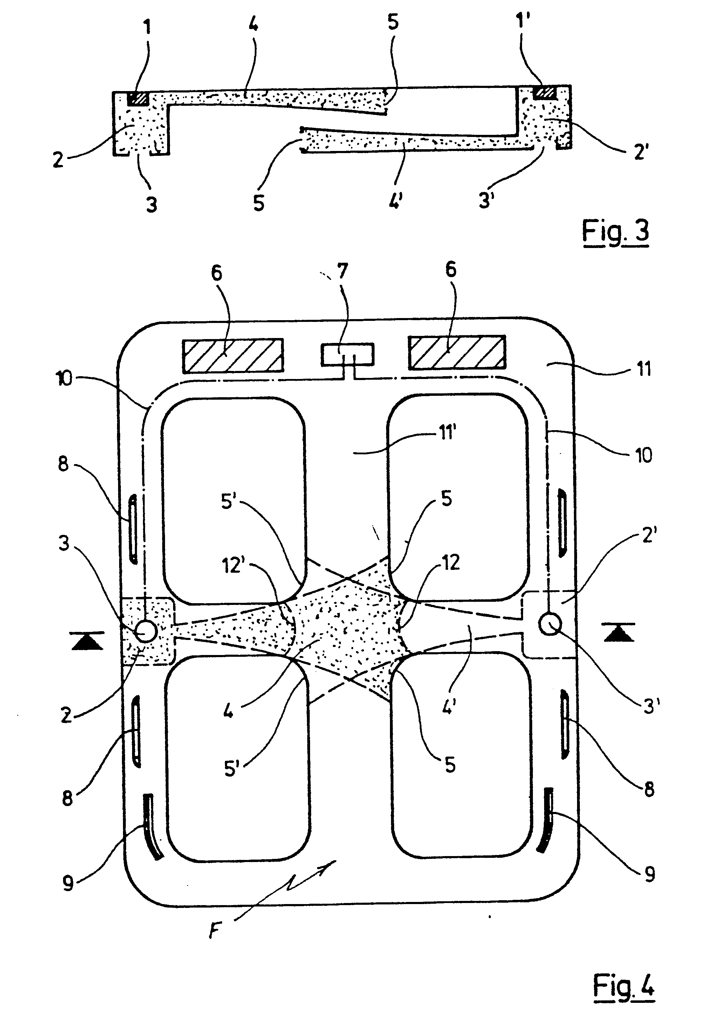

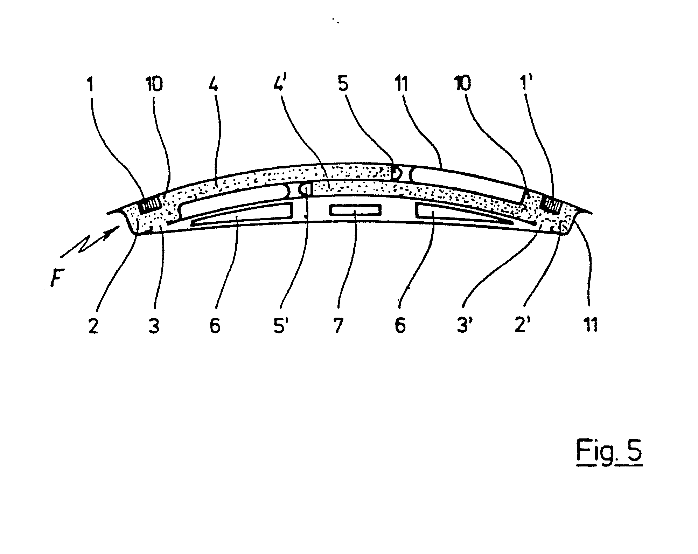

Der schematisiert wiedergegebene Personenkraftwagen in Fig. 1 und 2 ist im Dachbereich mit einer diesen übergreifenden Innenverkleidung in Form einer selbsttragenden Himmelschale, nämlich dem Formteil F nach Fig. 4 und 5 versehen. Das Formteil F weist etwa in seiner Mitte in Richtung der Längsachse des Personenkraftwagens gesehen und damit etwa mittig zwischen der vorderen und hinteren Sitzreihe auf der rechten und linken Seite in den Randbereichen 11 je einen elektrodynamischen Wandler 1, 1' in Form von Lautsprechern auf, die wie Fig. 3 schematisiert zeigt, jeweils in Schallkammern 2, 2' untergebracht sind. die Schallkammern 2, 2' sind mittels akustischer Leitungsführungen 4, 4', die Schallleitkanäle bilden, in der dargestellten Form zur Mitte der Fahrgastzelle hin verlängert. Die akustischen Leitungsführungen 4, 4' enden in Schallaustrittsöffnungen 5, 5', wobei sie sich zu diesen hin nach Art eines Schalltrichters in der Ebene des Formteiles F hyperbolisch erweitern. Weitere Schallaustrittsöffnungen 3, 3' sind direkt innerhalb der Schallkammern 2, 2' mit Öffnungsrichtung zu den Insassen des PKW's hin vorgesehen. Die Dimensionierung und gegebenenfalls Dämpfung und damit die Aufteilung der Schallenergie jedes elektrodynamischen Wandlers 1, 1' innerhalb der zugehörigen Schallkammern 2, 2' ist so gewählt, dass die auf der linken Seite in Fahrtrichtung sitzenden Personen direkt von der Schallaustrittsöffnung 3 des elektrodynamischen Wandlers 1 und der Schallaustrittsöffnung 5' des elektrodynamischen Wandlers 1' beschallt werden, während die in Fahrtrichtung rechts sitzenden Insassen des Fahrzeuges einen unmittelbaren Schallempfang von der Austrittsöffnung 5 über die akustische Leitungsführung 4 des Lautsprechers 1 und die Schallaustrittsöffnung 3' in der Schallkammer 2' haben. Die Schallkammern 2, 2' und die akutischen Leitungsführungen 4, 4' sind vorteilhaft integraler Bestandteil des Formteiles F. Sie können jedoch zumindest teilweise je nach Gestaltung des Formteils F auch aus gesondert gefertigten Teilen bestehen, die mit dem Formteil F zu einer Einheit zusammengefügt sind oder werden.

Die Schalleitkanäle in der dargestellten Form ermöglichen einen gleichermassen hochqualitativen Stereoempfang unabhängig von der Wahl des Sitzes innerhalb des Fahrzeuges, insbesondere unabhängig davon, ob von einem Fahrgast die rechte oder linke Seite des Fahrzeuginnenraumes belegt wird.

Fig. 4 zeigt ein montagefertiges Formteil als freitragende Himmelschale für die Innenverkleidung des Dachbereiches eines Personenkraftwagens in Draufsicht von der Innenseite der Fahrgastzelle aus gesehen. Es ist dargestellt, dass die Schallkammern 2, 2' für die Aufnahme der Lautsprecher und die akustischen Leitungsführungen 4, 4' direkt in das Formteil eingeformt sind, wobei die schallabstrahlenden elektrodynamischen Wandler 1, 1' das Formteil F wengistens teilweise durchgreifen beziehungsweise innerhalb der durch die Formgebung vorgegebenen Freiräume untergebracht sind. Das Formteil F ist so ausgebildet, dass es einen umlaufenden Randbereich 11 und eine hiermit verbundene kreuzförmige mittlere Ausstülpung 11' aufweist, die infolge der aus den Zeichnungen im einzelnen ersichtlichen Formgebung Versteifungsrippen für die freitragende Himmelschale bilden. Innerhalb dieser Kanäle bildenden Randbereiche 11 bzw. der mittleren Ausstülpung 11' sind vorzugsweise, jedoch zumindest teilweise, die akustischen Leitungsführungen 4, 4' wie auch Lüftungskanäle 12 untergebracht. Die Lüftungskanäle 12 führen über Lüftungsgitter 9 bzw. entsprechende Lüftungsschlitze in den Innenraum des Personenkraftwagens, und sie sind als Entlüftungsöffnungen vorzugsweise im Bereich des Wagenfonds angeordnet, können vorteilhaft jedoch auch im vorderen Teil der Himmelschale als Belüftungsöffnungen vorgesehen werden.

Wie aus Fig. 4 darüber hinaus hervorgeht sind an dem Formteil, also der freitragenden Himmelschale, zusätzlich die Sonnenblenden 6 und die Innenbeleuchtung 7 angebracht. Handgriffe 8 bilden weitere zusätzliche integrale Bestandteile bzw. Bauteile des Formteils F, wobei diese gleichzeitig das Formteil an der Dachkonstruktion des Personenkraftwagens halten. Hierfür können beispielsweise die durch die Handgriffe 8 und das Formteil F hindurchgeführten Schrauben zu beiden Seiten jedes Handgriffes 8 unmittelbar in zugehörige Bohrungen der Dachkonstruktion eingreifen.

Kabelführungen 10 für die elektrodynamischen Wandler 1, 1' aber auch für die Innenbeleuchtung 7 werden vorteilhaft mit der Ausformung der freitragenden Himmelschale, also bei der Herstellung des Formteiles F in dieses miteingepresst oder auf die nicht sichtbare Oberfläche des Formteiles in dauerhaft haftender Form aufgebracht, beispielsweise als Kabelführung, etwa als Flachbandkabel.

Schliesslich sind die zu Fig. 4 in dem dort gezeigten Ausführungsbeispiel mit den akustischen Leitungsführungen 4, 4' verbundenen Schallaustrittsöffnungen 5, 5' im Bereich der kreuzförmigen mittleren Ausstülpung 1' verschlossen, was dort mit dem Bezugszeichen 12, 12' dargestellt ist, so dass je eine Schallaustrittsöffnung 5 bzw. 5' für je einen Sitz eines viersitzigen Personenkraftwagens vorhanden ist.

In Fig. 5 ist das eine freitragende Himmelschale bildende grossflächige Formteil F im Schnitt entlang der Linie gemäss Fig. 4 gezeigt. Das freitragende Formteil besteht aus verpresstem Bindemittelanteile enthaltenden Lignozellulose-Fasermaterial, wobei die Formgebung so gewählt ist, dass die akustischen Leitungsführungen 4, 4' wie auch die Lüftungskanäle 12 vorgebenden Randbereiche 11 und entsprechend auch die mittlere Ausstülpung 11' in einem Pressvorgang in das Formteil F einbringbar sind. Überall dort, wo im Querschnitt eine mehrschichtige Wandungsführung gewisser Formteilbereiche nicht zu vermeiden ist, werden diese Abschnitte der freitragenden Himmelschale als gesonderte Formteilabschnitte hergestellt und nachfolgend in geeigneter Weise in die Himmelschale eingefügt und mit dieser zu einem montagefähigen Bauteil zusammengesetzt. Fig. 5 zeigt, dass die Lage der direkten Schallaustrittsöffnungen 3, 3' aus den Kammern 2, 2' und der Schallaustrittsöffnungen 5, 5', die über die akustischen Leitungsführungen 4, 4' mit den Schallkammern 2, 2' so gewählt ist und deren Querschnitt derart vorgegeben werden kann, dass die Lautsprecheranordnung geringstmögliche Abstände zwischen den elektrodynamischen Wandlern 1, 1' und den Köpfen der Fahrzeuginsassen bei platzunabhängiger ausgewogener stereophoner Beschallung vorgeben. Die Lage der direkten Schallaustrittsöffnungen 3, 3' entspricht dem Anbringungsort der Lautsprecher. Die akustischen Leitungsführungen 4, 4', also die Schalleitkanäle, münden im Mittelbereich der kreuzförmigen mittleren Ausstülpung 11' und es liegen Teilbereiche der akustischen Leitungsführungen 4, 4' im Ausführungsbeispiel über die Breite der mittleren Ausstülpung 11' übereinander.

Falls auf die akustischen Leitungsführungen verzichtet wird, ist es selbstverständlich möglich, die elektrodynamischen Wandler 1, 1' gegebenenfalls unter Weglassung der Schallkammern 2, 2' direkt auf der in den Innenraum des Fahrzeuges weisenden Oberfläche des Formteiles F zu montieren. Bei monophonem Empfang kann unter Verwendung nur eines einzigen Lautsprechers dieser entlang der mittleren Längsachse des Personenkraftwagens an der freitragenden Himmelschale angebracht sein. Vorteilhaft ist es auch, die beschriebene Lautsprecheranordnung wenigstens für die mittleren und hohen Frequenzen des Hörbereiches des menschlichen Ohres zu installieren und gegebenenfalls Tieftonlautsprecher zusätzlich im Wagenfond vorzusehen.

Besonders vorteilhaft ist eine Verbesserung der Be- und Entlüftung des Fahrzeuginnenraumes dadurch, dass auch Zuluft dem Fahrzeuginnenraum im Bereich der Himmelschale zugeführt werden kann. Die Abluft wird, etwa in Höhe der hinteren Dachträger, abgeleitet und ins Freie geführt. Bei dieser Art der Belüftung bildet sich knapp unterhalb der Himmelschale ein starker Luftstrom in Längsrichtung des Fahrzeuges aus, der eine intensive Saugwirkung auf die Umgebungsluft ausübt, und somit eine indirekte Entlüftung des Fahrzeuges bewirkt. Diese Art der Belüftung entspricht etwa dem, was dadurch erreicht wird, dass bei bisherigem Stand der Belüftungstechnik von Fahrzeugen ein Schiebedach geringfügig geöffnet wird.

In der gleichen Art, wie die Abluft von den Durchtrittsöffnungen zu den Entlüftungsgittern des hinteren Dachträgers durch Rippen oder Kanäle geführt werden kann, kann die Zuluft aus dem Bereich der vorderen Dachträger durch gleichgeartete Bauelemente, die in die Himmelschale integriert sind, geführt werden. Bei der heutigen integralen Bauweise der Fahrzeugkarosserien ist es in einfacher Weise möglich, die Frischluft zur Belüftung des Innenraumes direkt aus der Stauzone wie beim jetzigen Stand der Technik zu entnehmen, und sie den vorderen Seitenpfosten, die das Dach tragen, zuzuführen. Diese können dann die Frischluft in den Bereich der Himmelschale einleiten.

Die Luftführungskanäle für Zu- und Abluft braucht dabei an der Himmelschale nicht unbedingt als geschlossene Konstruktion ausgebildet werden, da die Dachhaut der Karosserie den Abschluss derartiger Kanäle mit übernehmen kann. In diesem Falle wären die Luftführungselemente an der Rückseite der Himmelschale stegartig ausgebildet. Diese Luftführungsstege sind zum Karosseriedach hin zweckmässigerweise durch elastisch nachgiebige Dichtungen begrenzt, so dass im Zusammenwirken von Himmelschale und Karosseriedach geschlossene Luftführungskanäle entstehen.

Zwischen Karosseriedach und Himmelschale kann in einem kanalartig begrenzten Querschnitt Frischluft aus dem Frontbereich des Fahrzeuges in den Heckbereich des Fahrzeuges geführt werden, wobei dieser Luftstrom durch die Wandung der Himmelschale vom Innenraum des Fahrzeuges getrennt ist. Der Führungskanal dieses Hilfsluftstromes, der den Fahrzeuginnenraum nicht berührt, ist durch mindestens eine, vorzugsweise aber mehrere Durchtrittsöffnungen mit dem Fahrzeuginnenraum verbunden. Auf diese Weise ist es möglich, die Saugwirkung des Hilfsluftstromes zu einer weitgehend zugfreien Belüftung des Innenraumes des Fahrzeuges auszunutzen, ohne dass der verhältnismässig schnelle Saugstrom im Fahrzeuginnenraum selbst geführt werden muss.

Der zwischen Formteil und Fahrzeugdach geführte Hilfsluftstrom zum Absaugen aus dem Innenraum kann auch in Form einer Venturidüse ausgebildet sein, die in dem Kanalquerschnitt, der an das Formteil an integriert ist, enthalten sein kann, und dass der Innenraum an der Stelle des engsten Querschnitts mit diesem düsenartigen Hilfsluftkanal verbunden ist.

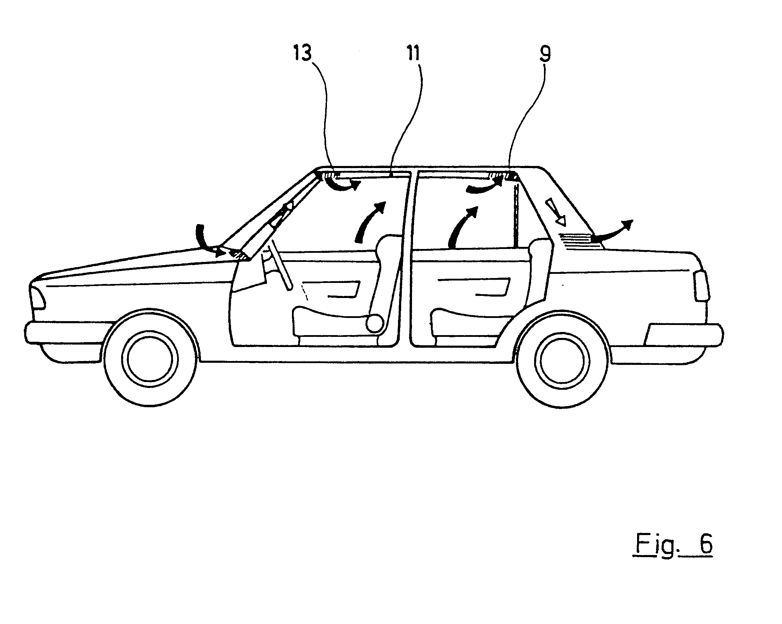

Fig. 6 stellt in einer schematischen Ansicht, bei der die Seitentüren eines Fahrzeuges weggelassen wurden, die Luftführung dar, die mit Hilfe eines erfindungsgemässen Formteils eine verbesserte, weil zugfreie Entlüftung des Innenraumes bewirkt. Die Frischluft wird – wie üblich – dem Staubereich vor der Frontscheibe entnommen und in die Seitenpfosten (vordere Dachträger) eingeleitet, die sie dem Bereich der Himmelschale 11 zuführen. Hier werden sie im oberen Frontscheibenbereich über die Durchtrittsöffnungen 13 dicht unterhalb der Himmelschale dem Innenraum des Fahrzeuges zugeführt. Die Luftabführung erfolgt mit Hilfe der verkleideten Luftführungsöffnungen 9 im Bereich der hinteren Dachträger, wie dies schon ausgeführt wurde. Der Luftstrom, der eine verhältnismässig hohe Geschwindigkeit hat, wird über den Köpfen der Insassen längs der Dachpartie des Innenraumes geführt, so dass eine Belästigung der Fahrzeuginsassen durch die hohe Strömungsgeschwindigkeit der Frischluft unterbleibt. Wie die Pfeile andeuten, hat dieser Luftstrom eine Saugwirkung auf die übrigen Partien des Fahrzeuginnenraumes, in dem sich die Insassen befinden, so dass er eine ähnliche Wirkung ausübt, wie eine Wasserstrahlpumpe.

Zusätzlich zu den der Entlüftung des Fahrzeuginnenraums dienenden Luftströmungen ist es möglich, zwischen der Rückseite des Fahrzeughimmels und dem Karosseriedach einen Luftstrom zu führen, der Kondenswasserbildung zwischen Fahrzeugdach und Himmelverkleidung dadurch verhindert, dass dieser Zwischenraum während der Fahrt zwangsbelüftet wird. Die für diese Zusatzbelüftung notwendigen Luftströme könnten von denen abgezweigt werden, die für die Innenraumbelüftung gemäss den vorstehenden Ausführungen benötigt werden. Die hierfür notwendigen zusätzlichen Luftführungselemente könnten ebenfalls in das Formteil integriert werden, das die Himmelschale bildet.

## Patentansprüche

1. Mehrzweckformteil (F) als freitragende Himmelschale für die Innenverkleidung des Dachbereiches eines Personenkraftwagens (PKW), bestehend aus einem vorzugsweise oberflächenkaschierten dämpfenden Material, wie einem verpressten Faservlies oder dergleichen, und an der Deckenkonstruktion arretierbaren Befestigungsmitteln, dadurch gekennzeichnet, dass mindestens ein schallabstrahlender elektrodynamischer Wandler (1, 1') das Formteil (F) wenigstens teilweise durchgreifend in dieses eingefügt ist, wobei der Aufbau derart vorgenommen und die Formgebung des Formteils (F) so vorgewählt sind, dass im Einbauzustand der bzw. die Wandler (1, 1') mit zugehörigen elektrischen und/oder akustischen Leitungsführungen (4, 4') eine bausatzartige integrale Einheit bilden.

2. Mehrzweckformteil nach Anspruch 1, dadurch gekennzeichnet, dass das freitragende verpresste Formteil (F) aus einem Bindemittelanteile enthaltenden Lignozellulose-Fasermaterial besteht, bei dem wenigstens die akustischen Leitungsführungen (4, 4') gleichzeitig zusätzliche Versteifungsrippen für das Formteil bilden.

3. Mehrzweckformteil nach Anspruch 1 und 2, dadurch gekennzeichnet, dass je ein elektrodynamischer Wandler (1, 1') bezüglich der Mitte der PKW-Längsachse im linken und rechten Randbezirk (11) des Formteils (F) angeordnet ist.

4. Mehrzweckformteil nach Anspruch 1 bis 3, dadurch gekennzeichnet, dass die akustischen Leitungsführungen (4, 4') in das Formteil (F) bei dessen Ausformung zumindest teilweise mit eingebracht und/oder nachträglich aufgesetzt sind und dass diese Schallkanäle wenigstens eine Schallaustrittsöffnung (3, 3' bzw. 5, 5') zum Innenraum des PKW's aufweisen.

5. Mehrzweckformteil nach Anspruch 1 bis 4, dadurch gekennzeichnet, dass die elektrischen Leitungen für die elektrodynamischen Wandler (1, 1') in das Formteil (F) eingefügt sind.

6. Mehrzweckformteil nach Anspruch 1, dadurch gekennzeichnet, dass als zusätzliche integrale Bauteile an bzw. in dem Formteil (F) Lüftungsgitter (9) mit zugehörigen Lüftungskanälen (13) vorgesehen sind.

7. Mehrzweckformteil nach Anspruch 1, dadurch gekennzeichnet, dass Haltegriffe (8) an dem Formteil (F) weitere zusätzliche Bauteile bilden, wobei diese gleichzeitig die das Formteil an der Dachkonstruktion des PKW's arretierenden Befestigungsmittel sind.

8. Mehrzweckformteil nach Anspruch 1 bis 7, dadurch gekennzeichnet, dass zumindest der bzw. die Lautsprecher für die abzustrahlenden mittleren und hohen Frequenzen im Dachbereich des Innenraums angeordnet sind.

9. Mehrzweckformteil nach wenigstens einem der Ansprüche 1 bis 7, dadurch gekennzeichnet, dass die Lüftungsgitter (9) Be- und/oder Entlüftungsgitter bilden und dass wenigstens ein Lüftungskanal über einen erheblichen Teil der Länge des Formteils (F) in dieses eingeformt bzw. an dasselbe angesetzt ist.

10. Mehrzweckformteil nach einem oder mehreren der bisherigen Ansprüche, dadurch gekennzeichnet, dass es mindestens eine Durchtrittsöffnung für Zu- und/oder Abluft besitzt, gegebenenfalls in optisch ansprechender Verkleidung.

11. Mehrzweckformteil nach einem oder mehreren der Ansprüche 1 bis 9, dadurch gekennzeichnet, dass der oder den Durchtrittsöffnungen für Zu- und/oder Abluft auf der Formteilrückseite Luftführungselemente in Form von Kanälen, Trennwänden oder dergleichen zugeordnet sind.

**Claims**

1. A preformed multifunction self-supporting roof lining shell (F) for the inside panelling of the roof area of a passenger car, comprising a preferably surface-coated damping material such as a pressed nonwoven fabric or similar, and fastening means locking on the ceiling construction, characterised in that at least one sound-projecting electrodynamic transducer (1, 1') is inset into the preformed part (F) so as to penetrate through the latter at least in part, the manner of assembly and the design of the preformed part (F) being such that when fitted the transducer of transducers (1, 1') form an integral assembly unit with associated electrical and/or acoustic conductor routings (4, 4').

2. The preformed multifunction part as claimed in Claim 1, characterised in that the self-supporting pressed preformed part (F) is made from a lignocellulose fibrous material with bonding agent content, where at least the acoustic conductor routings (4, 4') simultaneously constitute additional stiffening ribs for the preformed part.

3. The preformed multifunction part as claimed in Claims 1 and 2, characterised in that an electrodynamic transducer (4, 4') is arranged in each of the left and right peripheral zones (11) of the preformed part (F) relative to the centre of the passenger car's longitudinal axis.

4. The preformed multifunction part as claimed in Claims 1 to 3, characterised in that when the preformed part (F) is formed the acoustic conductor routings (4, 4') are at least partly incorporated therein and/or subsequently positioned thereon and that these sound ducts exhibit at least one sound outlet port (3, 3' and 5, 5') into the passenger car compartment.

5. The preformed multifunction part as claimed in Claims 1 to 4, characterised in that the electrical leads for the electrodynamic transducers (1, 1') are set into the preformed part (F).

6. The preformed multifunction part as claimed in Claim 1, characterised in that ventilation grilles (9) with associated ventilation ducts (13) are provided as additional integral components on or in the preformed part (F).

7. The preformed multifunction part as claimed in Claim 1, characterised in that handles (8) constitute further additional components on the preformed part (F), at the same time forming the fastening means locking the preformed part to the roof construction of the passenger car.

8. The preformed multifunction part as claimed in Claims 1 to 7, characterised in that at least the loudspeaker or loudspeakers for the middle and high frequencies being projected are arranged in the roof area of the compartment.

9. The preformed multifunction part as claimed in at least one of Claims 1 to 7, characterised in that the ventilation grilles (9) form air inlet and/or outlet grilles and that at least one ventilation duct is moulded into or joined onto the preformed part (F) over a substantial portion of its length.

10. The preformed multifunction part as claimed in one or more of the foregoing claims, characterised by having at least one passage for incoming and/or outgoing air, optionally in visually attractive panelling.

11. The preformed multifunction part as claimed in one or more of Claims 1 to 9, characterised in that air circuit means to the passage or passages for incoming and/or outgoing air are arranged in the form of ducts, partitions or similar on the back of the preformed part.

**Revendications**

1. Nappe préformée (F) à fonctions multiples pour l'habillage de plafond non soutenu pour le revêtement intérieur de la zone du toit d'une voiture automobile particulière (PKW), constituée, de préférence, d'une matière contre-collée en surface propre à amortir les bruits, telle qu'un non-tissé ou analogue, formé à la presse, et comportant des organes d'attache adaptés à se fixer à la structure du toit, nappe caractérisée en ce qu'elle comporte au moins un convertisseur électrodynamique d'émission sonore (1, 1') noyé dans ce préformé (F) et le traversant au moins en partie; et en ce que le montage et la mise en forme du préformé (F) sont réalisées de telle manière qu'en position de service chacun des convertisseurs (1, 1') constitue, avec ses canalisations électriques et/ou acoustiques (4, 4'), un ensemble unitaire intégrant tout un jeu de pièces détachées.

2. Nappe préformée à fonctions multiples selon la revendication 1, caractérisée en ce que le préformé autoporteur (F) est constitué d'une matière fibreuse à base de ligno-cellulose contenant une certaine proportion de liant, et dans laquelle au moins les canalisations acoustiques (4, 4') jouent en même temps le rôle de nervures de raidissement complémentaires pour le préformé.

3. Nappe préformée à fonctions multiples selon les revendications 1 et 2, caractérisée en ce qu'elle est équipée de deux convertisseurs électrodynamiques (1, 1'), montés chacun à droite et à gauche dans la zone de bordure (11) du préformé (F), à mi-longueur de l'axe longitudinal de la voiture (PKW).

4. Nappe préformée à fonctions multiples selon les revendications 1 à 3, caractérisée en ce que les conduits acoustiques (4, 4') sont incorporés au moins en partie dans le préformé (F) au moment de sa mise en forme, et/ou montés postérieurement, et en ce que ces conduits acoustiques comportent au moins un orifice de sortie sonore (3, 3' et 5, 5') débouchant à l'intérieur de la voiture (PKW).

5. Nappe préformée à fonctions multiples selon les revendications 1 à 4, caractérisée en ce que les canalisations électriques (4, 4') des convertisseurs électrodynamiques sont noyées dans le préformé (F).

6. Nappe préformée à fonctions multiples selon la revendication 1, caractérisée en ce que le préformé (F) comporte, comme pièces additionnelles intégrées, des ouïes d'aération (9) pourvues de canaux d'aération (13).

7. Nappe préformée à fonctions multiples selon la revendication 1, caractérisée en ce que le préformé (F) comporte comme pièces additionnelles intégrées des poignées (8), qui servent en même temps d'organes de fixation pour assujettir le préformé (F) à la structure du toit de la voiture (PKW).

8. Nappe préformée à fonctions multiples selon les revendications 1 à 7, caractérisée en ce qu'au moins chacun des haut-parleurs servant à produire les fréquences moyennes et hautes est disposé dans la zone du toit à l'intérieur de la voiture.

9. Nappe préformée à fonctions multiples selon au moins une des revendications 1 à 7, caractérisée en ce que les ouïes d'aération (9) constituent des orifices d'arrivée et d'évacuation d'air, et sont associées à au moins un canal d'aération qui s'étend sur une partie importante de la longueur du préformé (F) et est ménagé dans le préformé, au moment de sa mise en forme, ou lui est accolé.

10. Nappe préformée à fonctions multiples selon une ou plusieurs des revendications 1 à 9, caractérisée en ce qu'elle comporte au moins une ouverture d'arrivée et/ou d'évacuation d'air, éventuellement dans un revêtement convenant du point de vue optique.

11. Nappe préformée à fonctions multiples selon une ou plusieurs des revendications 1 à 9, caractérisée en ce que chaque ouverture d'arrivée et/ou d'évacuation d'air est associée à des conduits d'air, disposés sur la face arrière du préformé (F) et constitués par des canaux, des cloisons de séparation, ou des éléments analogues.

0 123 004

Fig. 1

Fig. 2

Fig. 3

Fig. 4

Fig. 5

Fig. 6